Europäisches Patentamt

European Patent Office

Office européen des brevets

(19)

(11)     EP 1 624 174 A1

(12)     **DEMANDE DE BREVET EUROPEEN**

(43) Date de publication:
    **08.02.2006 Bulletin 2006/06**

(51) Int Cl.:
    *F02D 41/14* (2006.01)

(21) Numéro de dépôt: **05300628.4**

(22) Date de dépôt: **28.07.2005**

(84) Etats contractants désignés:
    **AT BE BG CH CY CZ DE DK EE ES FI FR GB GR
    HU IE IS IT LI LT LU LV MC NL PL PT RO SE SI
    SK TR**
    Etats d'extension désignés:
    **AL BA HR MK YU**

(30) Priorité: **06.08.2004 FR 0408734**

(71) Demandeur: **Peugeot Citroen Automobiles S.A.
    78140 Vélizy Villacoublay (FR)**

(72) Inventeurs:
    • **Souidi, Fayçal
      92130, Issy-les-Moulineaux (FR)**
    • **Desmarquet, Benjamin
      78600, Maisons-Laffitte (FR)**

(74) Mandataire: **Pinchon, Odile et al
    Peugeot Citroën Automobiles SA
    Propriété Industrielle (LG 081)
    18, Rue des Fauvelles
    92150 La Garenne-Colombes (FR)**

(54)     **Systeme de correction d'un signal de sortie d'une sonde à oxygene**

(57)     L'invention concerne un système de correction
(2) d'un signal de sortie ($I_s$) d'une sonde à oxygène (4)
associée à une ligne d'échappement (6) d'un moteur Diesel (8) de véhicule automobile, la sonde (4) présentant
un signal de sortie théorique ($I_{th}$) prédéterminé pour un
gaz correspondant à de l'air. Le système (2) comporte
en outre :

-   des moyens de surveillance (16) des conditions de
    fonctionnement du moteur (8) comprenant des
    moyens de détection (24) d'une coupure d'injection de carburant dans les cylindres du moteur (8), pendant une période de temps minimale prédéterminée,
pour déclencher le fonctionnement de moyens d'acquisition (18) d'un signal effectif ($I_e$) délivré par la
sonde (4) et de moyens de détermination (20) d'un
coefficient de dérive ($\beta$) entre ce signal effectif ($I_e$)
délivré par la sonde (4) et le signal de sortie théorique
($I_{th}$) de celle-ci ; et

-   des moyens de correction (22) du signal de sortie
    ($I_s$) de la sonde en fonction du coefficient de dérive
    ($\beta$) ainsi déterminé.

FIG.1

EP 1 624 174 A1

# Description

La présente invention concerne un système de correction d'un signal de sortie d'une sonde à oxygène.

Plus particulièrement, l'invention concerne un système de correction d'un signal de sortie d'une sonde à oxygène associée à une ligne d'échappement d'un moteur Diesel de véhicule automobile, la sonde présentant un signal de sortie théorique prédéterminé pour un gaz correspondant à de l'air.

Il est connu dans l'état de la technique de contrôler le fonctionnement d'un moteur de véhicule automobile par la gestion de la richesse du mélange air-carburant alimentant ce moteur.

La richesse de ce mélange est déterminée à partir de la teneur en oxygène des gaz d'échappement du moteur. Pour connaître cette teneur en oxygène, il est connu de monter une sonde à oxygène dans la ligne d'échappement du véhicule automobile. En particulier, une sonde à oxygène proportionnelle peut être utilisée.

Ces sondes à oxygène proportionnelles délivrent un signal, appelé « courant de pompage », proportionnel à la teneur en oxygène des gaz d'échappement auxquels elles sont soumises. Une courbe nominale, représentant la teneur en oxygène en fonction du courant délivré par la sonde, est établie par le constructeur de la sonde à partir d'un lot de sondes. Cette courbe constitue donc une courbe moyenne des caractéristiques propres à chaque sonde fabriquée.

Toutefois, cette courbe nominale est néanmoins imprécise. L'origine de cette imprécision est soit une dispersion de fabrication des sondes liée à des caractéristiques mécaniques, physiques ou chimiques non maîtrisées, soit une dérive des sondes, au cours du temps, due par exemple au vieillissement des sondes ou à un encrassement des éléments sensibles des sondes par des particules présentes dans les gaz d'échappement.

L'invention a pour but d'améliorer la précision de mesure de la teneur en oxygène sur toute la plage de mesure et pendant toute la durée de vie du véhicule.

A cet effet, l'invention a pour objet un système de correction du type précité, caractérisé en ce qu'il comporte :

- des moyens de surveillance des conditions de fonctionnement du moteur comprenant des moyens de détection d'une coupure d'injection de carburant dans les cylindres du moteur pendant une période de temps minimale prédéterminée, pour déclencher le fonctionnement de moyens d'acquisition d'un signal effectif délivré par la sonde et de moyens de détermination d'un coefficient de dérive entre ce signal effectif délivré par la sonde et le signal de sortie théorique de celle-ci ; et
- des moyens de correction du signal de sortie de la sonde en fonction du coefficient de dérive ainsi déterminé.

Suivant des modes particuliers de réalisation, le système comporte une ou plusieurs des caractéristiques suivantes :

- les moyens de détermination dudit coefficient de dérive sont adaptés pour déterminer celui-ci en fonction d'un écart relatif entre les signaux effectif et théorique selon la relation suivante :

$$\beta = \frac{1}{1+\alpha}$$

dans laquelle $\beta$ est le coefficient de dérive et $\alpha$ est l'écart relatif déterminé entre ces signaux effectif et théorique :

- les signaux effectif et théorique sont matérialisés par des courants, et en ce que l'écart relatif est calculé selon la relation suivante :

$$\alpha = \frac{I_e - I_{th}}{I_{th}}$$

dans laquelle $I_e$ est le courant effectif délivré par la sonde, $I_{th}$ est le courant de sortie théorique de la sonde et $\alpha$ est l'écart relatif ;
- les moyens de détermination du coefficient de dérive comprennent en outre des moyens de filtrage passe bas de l'écart relatif ;
- les moyens de surveillance comprennent en outre des moyens de comparaison propres à comparer lesdites conditions de fonctionnement du moteur à des conditions de fonctionnement prédéterminées pour déclencher ou non le fonctionnement des moyens d'acquisition et des moyens de détermination en fonction du résultat de cette comparaison ;
- les moyens de surveillance comprennent des moyens de mesure de la température du moteur aptes à délivrer ladite température du moteur audits moyens de comparaison, et les moyens de comparaison sont adaptés pour comparer la température mesurée à une température de seuil pour déclencher le fonctionnement des moyens d'acquisition et des moyens de détermination, lorsque ladite température mesurée est supérieure à ladite température de seuil ;
- les moyens de surveillance comprennent en outre des moyens de mesure de la pression atmosphérique aptes à délivrer ladite pression atmosphérique audits moyens de comparaison, et les moyens de comparaison sont adaptés pour comparer cette pression mesurée à au moins une pression de seuil pour déclencher le fonctionnement des moyens d'acquisition et des moyens de détermination, lorsque cette pression mesurée et comprise dans une plage de pressions prédéfinie ;

- les moyens de surveillance comprennent en outre des moyens d'évaluation de l'état de fonctionnement de ladite sonde, et les moyens de surveillance sont adaptés pour déclencher le fonctionnement des moyens d'acquisition et des moyens de détermination, lorsque la sonde est opérationnelle.

L'invention sera mieux comprise à la lecture de la description qui va suivre, donnée uniquement à titre d'exemple et faite en se référant aux dessins annexés, sur lesquels :

- la Fig.1 est un schéma synoptique d'un système de correction selon l'invention, associé à une ligne d'échappement d'un moteur de véhicule automobile ; et
- la Fig.2 est un graphe représentant des exemples de courbes nominale et réelle d'une sonde à oxygène proportionnelle.

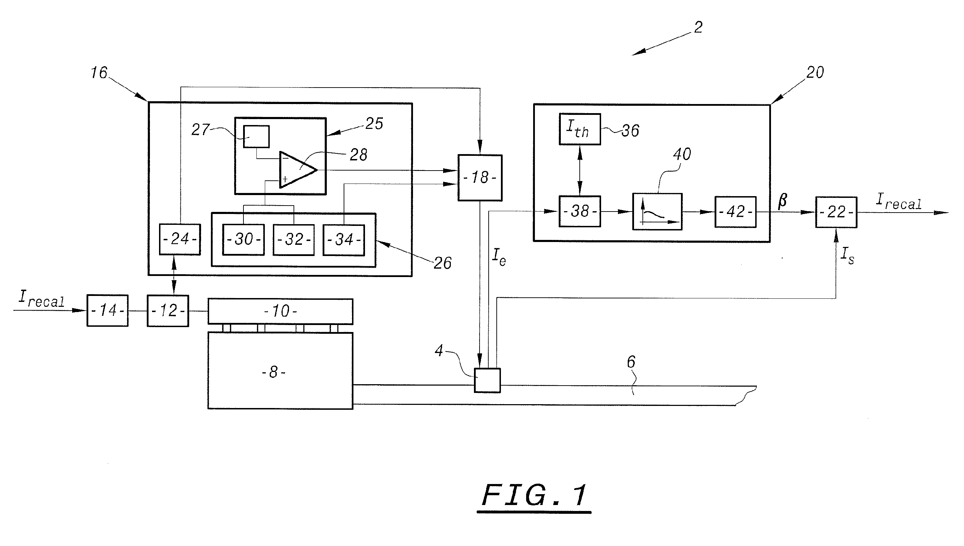

La Fig.1 illustre un système de correction 2 d'un signal de sortie $I_s$. d'une sonde 4 à oxygène proportionnelle, intégrée dans une ligne d'échappement 6 d'un moteur Diesel 8, par exemple à injection directe par rampe commune ou à injecteurs-pompes d'un véhicule automobile.

Le signal de sortie $I_s$ de la sonde 4 est proportionnel à la teneur en oxygène des gaz contenus dans la ligne d'échappement 6. Il est, par exemple, constitué par un courant de sortie $I_s$.

De façon classique, la sonde à oxygène 4 est caractérisée par une courbe nominale définissant la teneur en oxygène des gaz d'échappement en fonction du signal $I_s$ de sortie de la sonde 4 intégrée dans la ligne d'échappement 6.

Cette courbe nominale comporte une valeur de sortie prédéterminée, ci-après appelée « signal de sortie théorique $I_{th}$ », correspondant au signal de sortie de la sonde 4 lorsque celle-ci est placée dans de l'air pur, c'est-à-dire dans un air comportant 20,95 % d'oxygène.

Le moteur 8 est alimenté en carburant, par exemple, au moyen d'une rampe 10 commune d'alimentation en carburant des cylindres. Cette rampe commune d'alimentation 10 est associée à des moyens d'injection de carburant 12, commandés par des moyens de commande 14.

Les moyens de commande 14 sont adaptés pour mettre en oeuvre une stratégie d'alimentation en carburant du moteur 8, comme cela est connu dans l'état de la technique.

En particulier, les moyens de commande 14 définissent la quantité de carburant à injecter et la quantité d'air à admettre dans les cylindres du moteur 8, pendant les phases de fonctionnement du moteur, en fonction de la teneur en oxygène des gaz d'échappement.

Les moyens de commande 14 sont, par exemple, constitués par le calculateur de contrôle du moteur.

Le système de correction 2 selon l'invention est apte à recevoir le signal de sortie $I_s$ de la sonde à oxygène 4, à le corriger pour tenir compte des spécificités de cette sonde particulière par rapport aux caractéristiques moyennes des sondes définies par la courbe nominale, et à délivrer un signal ainsi corrigé $I_{recal}$ aux moyens de commande 14.

A cette fin, le système de correction 2 est adapté pour acquérir le signal délivré par la sonde 4 dans des conditions particulières de fonctionnement du moteur 8, dans lesquelles le moteur 8 dégage de l'air pur dans la ligne d'échappement 6.

En conséquence, le système de correction 2 comprend des moyens de surveillance 16 des conditions de fonctionnement du moteur, propres à déclencher le fonctionnement de moyens d'acquisition 18 d'un signal effectif $I_e$ délivré par la sonde 4 et de moyens de détermination 20 d'un coefficient de dérive $\beta$ entre ce signal effectif $I_e$ et le signal théorique $I_{th}$ de celle-ci.

Ces conditions de fonctionnement du moteur correspondent à une coupure d'injection de carburant dans les cylindres du moteur 8 pendant une période de temps minimale prédéterminée.

En conséquence, ces moyens de surveillance 16 comprennent des moyens de détection 24 d'une coupure d'injection de carburant dans les cylindres du moteur. Cette coupure a lieu, par exemple, lors des phases en décélération du véhicule, en lever de pied.

Les moyens de détection 24, raccordés aux moyens d'injection 12, sont aptes à vérifier que le moteur 8 est en coupure d'injection, c'est-à-dire que la quantité de carburant injectée dans celui-ci est nulle, pendant la période de temps minimum prédéterminée. Cette période de temps minimum est calibrée lors des réglages de fonctionnement du moteur.

Lorsque ces conditions de coupure sont déclarées effectives pendant la durée prédéterminée, les moyens de détection 24 sont adaptés pour délivrer un signal de validation aux moyens d'acquisition 18.

Les moyens de surveillance 16 comprennent également des moyens de comparaison 25 et un module de vérification 26 des conditions statiques de fonctionnement du moteur 8.

Les moyens de comparaison 25 sont propres à recevoir des informations relatives aux conditions de fonctionnement du moteur 8 du module de vérification 26, et à les comparer à des conditions de fonctionnement du moteur prédéterminées pour déclencher ou non le fonctionnement des moyens d'acquisition 18 et des moyens de détermination 20, en fonction des résultats de cette comparaison.

Les moyens de comparaison 25 comprennent des moyens de stockage 27 des conditions de fonctionnement du moteur prédéterminées et un comparateur 28.

Le module de vérification 26 comprend des moyens 30 de mesure de la température du moteur 8, des moyens 32 de mesure de la pression atmosphérique et des moyens 34 d'évaluation du fonctionnement de la sonde à oxygène 4.

Les moyens 30 de mesure de la température sont aptes à délivrer aux moyens de comparaison 25, une information de température du moteur 8. Ils sont, par exemple, constitués par une sonde ou un capteur de température de l'eau de refroidissement du moteur.

Sur réception de cette information de température du moteur, le comparateur 29 est apte à comparer la température du moteur mesurée à une température de seuil prédéterminée, enregistrée dans les moyens de stockage 27, et à transmette un signal de validation aux moyens d'acquisition 18 lorsque cette température est supérieure à la température de seuil.

Les moyens 32 de mesure de la pression atmosphérique sont raccordés au comparateur 28 pour lui délivrer une information de pression mesurée.

Le comparateur 29 est adapté pour comparer la pression mesurée par les moyens de mesure 32 à deux pressions de seuil prédéfinies, enregistrées dans les moyens de stockage 27, et à envoyer un signal de validation aux moyens d'acquisition 18, lorsque cette pression mesurée est comprise dans un intervalle défini par ces deux pressions.

Les moyens 34 d'évaluation de l'état de fonctionnement de la sonde à oxygène 4 sont adaptés pour vérifier que la sonde 4 est opérationnelle et notamment que sa phase de chauffe est terminée et qu'elle n'est pas en panne. Si la sonde 4 est opérationnelle, les moyens 34 sont propres à délivrer un signal de validation aux moyens d'acquisition 18.

Sur réception des signaux de validation des moyens de détection 24, et des moyens d'évaluation 34, et des signaux de validation du comparateur 25 correspondant à la température du moteur et à la pression atmosphérique, les moyens d'acquisition 18 sont aptes à déclencher le fonctionnement de la sonde 4 pour que celle-ci délivre un signal effectif $I_e$ aux moyens de détermination 20.

Les moyens de détermination 20 comprennent un module 36 de stockage de données, un module 38 de calcul d'un écart relatif $\alpha$, un module 40 de filtrage passe-bas et un module 42 de calcul du coefficient de dérive $\beta$.

Le module de stockage 36 est apte à stocker l'information du signal de sortie théorique $I_{th}$ de la sonde 4 pour un gaz correspondant à de l'air.

Ce signal théorique $I_{th}$, obtenu à partir de la courbe nominale établie par le fabricant de la sonde 4, est enregistré dans le module 36, par le constructeur du véhicule automobile lors du montage dans le véhicule, de la sonde 4 et du système de correction 2 du signal de sortie $I_s$ de cette sonde.

Le module de calcul 38 est adapté pour calculer un écart relatif $\alpha$ entre le signal effectif $I_e$ délivré par la sonde 4 et le signal théorique $I_{th}$ de la sonde 4 enregistré dans les moyens de stockage 36, selon la relation suivante :

$$\alpha = \frac{I_e - I_{th}}{I_{th}}$$

Dans le cadre de l'invention, les signaux effectif $I_e$ et théorique $I_{th}$ de la sonde sont matérialisés par des courants.

Le module de filtrage 40, raccordé au module 38, est propre à filtrer l'écart relatif $\alpha$ calculé par le module 38, par un filtrage passe-bas pour éliminer les variations du signal délivré par la sonde.

A cet effet, une fonction de filtrage définie selon la relation suivante peut, par exemple, être utilisée.

Si

$$\left| \frac{d I_e}{dt} \right| < S1$$

alors

$$\alpha_{new} = \alpha_{old} + ff \times \left( \left( \frac{I_e - I_{th}}{I_{th}} \right) - \alpha_{old} \right)$$

dans laquelle :

- $I_e$ est le signal effectif délivré par la sonde, lorsque le moteur est placé dans des conditions de fonctionnement particulières décrites ci-dessus et en particulier lorsque les moyens de détection 24 ont déterminé une coupure d'injection de carburant pendant une période de temps prédéterminée ;
- $I_{th}$ est le signal de sortie théorique de la sonde 4 prédéterminé pour un gaz correspondant à de l'air ;
- S1 est une valeur de seuil de stabilité prédéfinie en fonction du type de sonde 4 à oxygène proportionnelle ;
- $\alpha_{new}$ est le nouvel écart relatif calculé par les moyens de filtrage 40 ;
- $\alpha_{old}$ est l'ancien écart relatif calculé par le module 38 ; et
- ff est un facteur de filtrage prédéterminé généralement compris entre 0 et 1.

Le module de calcul 42 est apte à calculer le coefficient de dérive $\beta$ de la sonde 4, lorsque celle-ci est placée dans un milieu contenant de l'air pur. Ce coefficient de dérive $\beta$ définit une relation de proportionnalité entre le signal effectif $I_e$ délivré par la sonde 4 et le signal

de sortie théorique $I_{th}$ de la sonde 4 prédéterminé pour un gaz correspondant à de l'air. Il est défini par la relation suivante :

$$\beta = \frac{1}{1+\alpha}$$

Il est obtenu à partir de la relation suivante :

$$\alpha = \frac{I_e - I_{th}}{I_{th}}$$

Soit

$$I_{th} = \beta \times I_e$$

Le système de correction 2 selon l'invention comprend en outre des moyens de correction 22 du signal de sortie $I_s$ de la sonde en fonction du coefficient de dérive $\beta$ déterminé par les moyens de détermination 20.

Ces moyens de correction 22 sont adaptés pour recevoir le coefficient de dérive $\beta$ des moyens de détermination 20 ainsi que le signal de sortie $I_s$ de la sonde 4 lorsque le moteur 8 est dans des conditions classiques de fonctionnement, et à appliquer le coefficient de dérive $\beta$ au signal de sortie $I_s$ de la sonde pour corriger ce dernier.

Dans le cadre de l'invention, il est considéré que le coefficient de dérive $\beta$ calculé lorsque la sonde 4 est placée dans un milieu contenant de l'air pur, peut être appliqué au signal de sortie $I_s$ de la sonde, lorsque celle-ci n'est plus dans un milieu contenant de l'air pur.

Ainsi, lorsque la sonde 4 est placée dans un milieu contenant un mélange d'air et de gaz d'un autre type, la relation suivante est également vérifiée :

$$\alpha = \frac{I_s - I_{recal}}{I_{recal}}$$

dans laquelle $I_s$ est le signal de sortie de la sonde 4, lorsque la sonde est placée dans un milieu de mélange air/gaz et $I_{recal}$ est le signal corrigé par les moyens de correction 22.

L'écart relatif $\alpha$ du signal de la sonde 4 calculé dans l'air pur est alors considéré constant pour tout autre point de richesse et permet donc de corriger le signal délivré par la sonde 4 à tout moment.

En conséquence, $I_{recal} = \beta \times I_s$

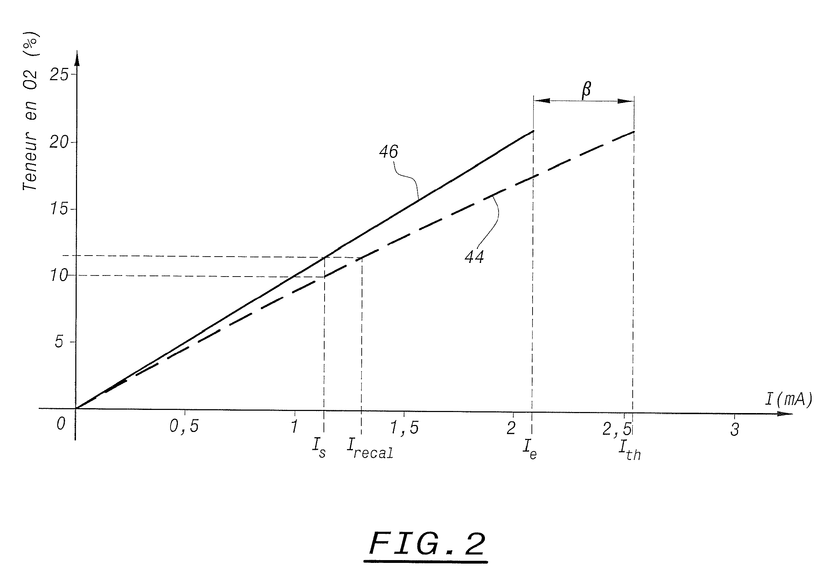

La Fig.2 représente un exemple de correction d'un signal de sortie $I_s$ d'une sonde 4 par le système de correction 2 selon l'invention.

Cette figure représente la courbe nominale 44 établie par le fabricant de la sonde 4 à oxygène proportionnelle. Selon cette courbe, la teneur en oxygène dans la ligne d'échappement 6 varie de 0%, lorsque le moteur 8 fonctionne avec une richesse égale à 1, à 20,95%, lorsque le moteur 8 fonctionne à une richesse égale à 0.

La courbe 46 est caractéristique d'une sonde particulière 4 dont le signal de sortie $I_s$ doit être corrigé.

Selon la courbe 44, lorsque la sonde 4 est placée dans un milieu contenant de l'air pur, elle devrait délivrer un courant de sortie théorique $I_{th}$ égal à environ 2,6 mA. Toutefois, celle-ci délivre un courant effectif le environ égal à 2,1 mA.

Le système de correction 2 selon l'invention calcule le coefficient de dérive $\beta$ correspondant à un facteur de proportionnalité entre le courant de sortie théorique $I_{th}$ et le courant de sortie effectif $I_e$ de la sonde 4.

Lorsque le moteur 8 est à nouveau dans des conditions de fonctionnement classique, la même sonde particulière 4 délivre un courant de sortie $I_s$ égale à 1,1 mA, un tel courant correspond à une teneur en oxygène de 10%, lorsque la sonde 4 suit la caractéristique de la courbe nominale 44. Toutefois, cette teneur en oxygène de 10% est erronée, car la sonde 4 présente des caractéristiques particulières définies par la courbe 46.

Les moyens de correction 22 selon l'invention appliquent le coefficient de dérive $\beta$ préalablement calculé, au courant de sortie $I_s$ de la sonde 4. Le courant ainsi corrigé $I_{recal}$ correspond à une teneur en oxygène de 12%.

En variante, le module de surveillance 26 comprend également des moyens de détermination du nombre de kilomètres parcourus par le véhicule automobile, et les moyens de comparaison 25 sont propres à comparer le nombre de kilomètres déterminé à des valeurs de seuil prédéfinies pour déclencher le fonctionnement des moyens d'acquisition 18, lorsque ce nombre est égal auxdites valeurs de seuil prédéterminées.

Bien entendu, d'autres modes de réalisation de l'invention peuvent être envisagés.

**Revendications**

1. Système de correction (2) d'un signal de sortie ($I_s$) d'une sonde à oxygène (4) associée à une ligne d'échappement (6) d'un moteur Diesel (8) de véhicule automobile, la sonde (4) présentant un signal de sortie théorique ($I_{th}$) prédéterminé pour un gaz correspondant à de l'air, **caractérisé en ce qu'**il comporte :

   - des moyens de surveillance (16) des conditions de fonctionnement du moteur (8) comprenant des moyens de détection (24) d'une coupure d'injection de carburant dans les cylindres du moteur (8), pendant une période de temps minimale prédéterminée, pour déclencher le fonctionnement de moyens d'acquisition (18) d'un signal effectif ($I_e$) délivré par la sonde (4) et de moyens de détermination (20) d'un coefficient de dérive ($\beta$) entre ce signal effectif ($I_e$) délivré par la sonde (4) et le signal de sortie théorique ($I_{th}$) de celle-ci ; et

- des moyens de correction (22) du signal de sortie ($I_s$) de la sonde en fonction du coefficient de dérive ($\beta$) ainsi déterminé.

2. Système selon la revendication 1, **caractérisé en ce que** les moyens de détermination (20) dudit coefficient de dérive ($\beta$) sont adaptés pour déterminer celui-ci en fonction d'un écart relatif ($\alpha$) entre les signaux effectif ($I_e$) et théorique ($I_{th}$) selon la relation suivante :

$$\beta = \frac{1}{1+\alpha}$$

dans laquelle $\beta$ est le coefficient de dérive et $\alpha$ est l'écart relatif déterminé entre ces signaux effectif et théorique.

3. Système selon la revendication 2, **caractérisé en ce que** les signaux effectif ($I_e$) et théorique ($I_{th}$) sont matérialisés par des courants, et **en ce que** l'écart relatif ($\alpha$) est calculé selon la relation suivante :

$$\alpha = \frac{I_e - I_{th}}{I_{th}}$$

dans laquelle $I_e$ est le courant effectif délivré par la sonde (4) , $I_{th}$ est le courant de sortie théorique de la sonde (4) et $\alpha$ est l'écart relatif.

4. Système selon la revendication 2 ou 3, **caractérisé en ce que** les moyens de détermination (20) du coefficient de dérive ($\beta$) comprennent en outre des moyens de filtrage passe bas (40) de l'écart relatif ($\alpha$).

5. Système selon l'une quelconque des revendications précédentes, **caractérisé en ce que** les moyens de surveillance (16) comprennent en outre des moyens de comparaison (25) propres à comparer lesdites conditions de fonctionnement du moteur (8) à des conditions de fonctionnement prédéterminées pour déclencher ou non le fonctionnement des moyens d'acquisition (18) et des moyens de détermination (20) en fonction du résultat de cette comparaison.

6. Système selon la revendication 5, **caractérisé en ce que** les moyens de surveillance (16) comprennent des moyens de mesure (30) de la température du moteur (8) aptes à délivrer ladite température du moteur (8) audits moyens de comparaison (25), et **en ce que** les moyens de comparaison (25) sont adaptés pour comparer la température mesurée à une température de seuil pour déclencher le fonctionnement des moyens d'acquisition (18) et des moyens de détermination (20), lorsque ladite température mesurée est supérieure à ladite température de seuil.

7. Système selon l'une quelconque des revendications 5 et 6, **caractérisé en ce que** les moyens de surveillance (16) comprennent en outre des moyens de mesure (32) de la pression atmosphérique aptes à délivrer ladite pression atmosphérique audits moyens de comparaison (25), et **en ce que** les moyens de comparaison (25) sont adaptés pour comparer cette pression mesurée à au moins une pression de seuil pour déclencher le fonctionnement des moyens d'acquisition (18) et des moyens de détermination (20), lorsque cette pression mesurée et comprise dans une plage de pressions prédéfinie.

8. Système selon l'une quelconque des revendications précédentes, **caractérisé en ce que** les moyens de surveillance (16) comprennent en outre des moyens d'évaluation (34) de l'état de fonctionnement de ladite sonde (4), et **en ce que** les moyens de surveillance (16) sont adaptés pour déclencher le fonctionnement des moyens d'acquisition (18) et des moyens de détermination (20), lorsque la sonde est opérationnelle.

_FIG. 1_

_FIG.2_

**Office européen**

**des brevets**

**RAPPORT DE RECHERCHE EUROPEENNE**

Numéro de la demande

EP 05 30 0628

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 676 213 A (ITSUJI ET AL) 30 juin 1987 (1987-06-30) * colonne 2, ligne 47 - colonne 3, ligne 2 * * colonne 11, ligne 45 - colonne 12, ligne 34; figure 10 * ----- | 1-4,8 | F02D41/14 |
| X | EP 1 048 834 A (SIEMENS AKTIENGESELLSCHAFT) 2 novembre 2000 (2000-11-02) * alinéas [0018], [0021] - [0026] * ----- | 1 | |
| A | US 2004/103642 A1 (ROSEL GERD ET AL) 3 juin 2004 (2004-06-03) * alinéas [0006], [0038], [0039] * ----- | 1 | |
| A | US 5 946 905 A (BOUWMAN ET AL) 7 septembre 1999 (1999-09-07) * colonne 3, ligne 1 - ligne 5 * * colonne 6, ligne 14 - ligne 24 * ----- | 1 | |

**DOMAINES TECHNIQUES RECHERCHES (Int.Cl.7)**

F02D
G01N

Le présent rapport a été établi pour toutes les revendications

| Lieu de la recherche | Date d'achèvement de la recherche | Examinateur |
|---|---|---|
| Munich | 20 septembre 2005 | Pileri, P |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

........................................................................

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 05 30 0628

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-09-2005

| Document brevet cité au rapport de recherche | | Date de publication | Membre(s) de la famille de brevet(s) | | Date de publication |
|---|---|---|---|---|---|
| US 4676213 | A | 30-06-1987 | DE | 3633616 A1 | 25-06-1987 |
| | | | JP | 1920112 C | 07-04-1995 |
| | | | JP | 6043981 B | 08-06-1994 |
| | | | JP | 62079344 A | 11-04-1987 |
| | | | KR | 9000147 B1 | 20-01-1990 |
| EP 1048834 | A | 02-11-2000 | DE | 19919427 A1 | 02-11-2000 |
| US 2004103642 | A1 | 03-06-2004 | WO | 02081887 A2 | 17-10-2002 |
| | | | DE | 10117050 C1 | 12-09-2002 |
| | | | EP | 1373700 A2 | 02-01-2004 |
| US 5946905 | A | 07-09-1999 | AU | 4848396 A | 04-09-1996 |
| | | | EP | 0809754 A1 | 03-12-1997 |
| | | | JP | 11500203 T | 06-01-1999 |
| | | | NL | 9500318 A | 01-10-1996 |
| | | | WO | 9625594 A1 | 22-08-1996 |

EPO FORM P0460